(19) Europäisches Patentamt / European Patent Office / Office européen des brevets

(11) **EP 4 641 429 A1**

(12) **EUROPEAN PATENT APPLICATION**

(43) Date of publication:
**29.10.2025 Bulletin 2025/44**

(21) Application number: **24305650.4**

(22) Date of filing: **25.04.2024**

(51) International Patent Classification (IPC):
*G06F 30/17* (2020.01)     *G06F 30/20* (2020.01)
*G06T 17/10* (2006.01)     *G06T 19/20* (2011.01)
*G06F 111/04* (2020.01)     *G06F 119/16* (2020.01)

(52) Cooperative Patent Classification (CPC):
**G06T 17/10; G06F 30/17; G06F 30/20; G06T 19/20;**
G06F 2111/04; G06F 2119/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Dassault Systèmes
78140 Vélizy-Villacoublay (FR)**

(72) Inventors:
• **State, Serban Alexandru
78140 Vélizy-Villacoublay (FR)**
• **Mehr, Eloi
78140 Vélizy-Villacoublay (FR)**

(74) Representative: **Bandpay & Greuter
11 rue Christophe Colomb
75008 Paris (FR)**

(54) **SHELL OR OFFSET FEATURE DETECTION IN A 3D MODEL REPRESENTING A MECHANICAL PART**

(57)     The disclosure notably relates to a computer-implemented method for shell or offset feature detection in a 3D model representing a mechanical part. The method comprises obtaining a segmentation of the 3D model into segments. The method further comprises browsing all possible pairs of segments, and for each pair of segments, detecting whether the segments of the pair are offset to each other with an offset value. This constitutes an improved solution for shell or offset feature detection in a 3D model representing a mechanical part.

FIG. 14

## Description

## TECHNICAL FIELD

The disclosure relates to the field of computer programs and systems, and more specifically to a method, system and program for shell or offset feature detection in a 3D model representing a mechanical part.

## BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

In mechanical design, also referred to as "manufacturing CAD", which designates software solutions for the design and/or manufacturing of mechanical parts, CAD features are used to define a CAD model representing the mechanical part. As known *per se* in this field, these features allow a complete mathematical, parameterized, definition of the model, which makes thus model usable for manufacturing, for example through prior conversion in a CAM file. Examples of such CAD features include the shell feature and the offset feature.

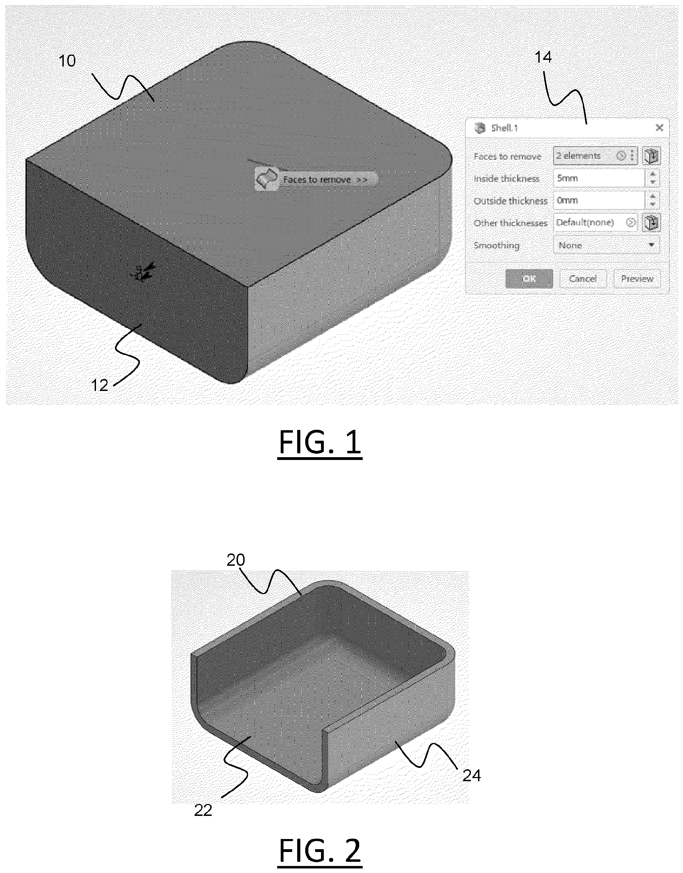

A shell feature (also referred to as "shell operation") in a CAD system generates offset surfaces of all surfaces of an input shape except the so-called "faces to remove", that may typically be user-defined/user-selected. The latter are used to generate the so-called "thin" faces that connect the inner and outer parts of the shell result (the inner and outer parts are offset from one another). FIG. 1 shows a screenshot of an example of application of a shell feature in a CAD software. Faces 10 and 12 are the faces to remove, and 14 designates a widget for imputing/selecting the values of the different parameters of the shell feature. FIG. 2 shows the result of applying the shell feature, with the thin faces 20, the inner faces 22, and the outer faces 24. CAD Shell features are largely used to automatically generate offset geometry in mechanical parts.

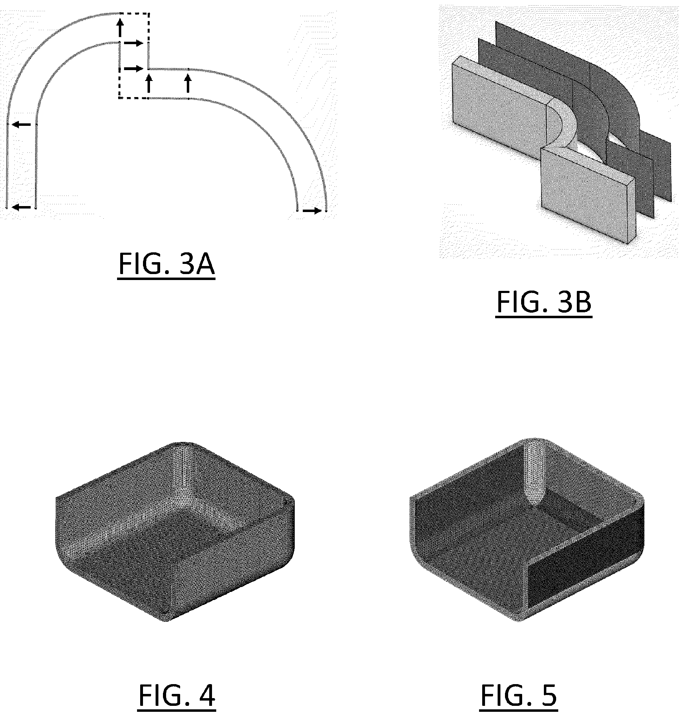

An offset feature in a CAD system performs an offset of input surfaces as does a shell feature but does not perform any removal of faces to remove to create thin faces. FIG. 3A illustrate an example of an offset operation. The Thick Surface feature in the CAD (notably in solutions provided by Dassault Systèmes), also generates offset surfaces from an input surface. However, it generates two offset surfaces (possibly only one and uses the input as a second "zero" offset surface) and lateral, orthogonal "thin" surfaces in order to create a closed surface that defines a volume and thus contributes to a part. In FIG. 3B if the middle surface is the input, the back surface is obtained with the "offset surface" feature, and the front volume is obtained with the "Thick Surface" feature.

Within this context, there is however a need for improved solution for shell or offset feature detection in a 3D model representing a mechanical part.

## SUMMARY

It is therefore provided a computer-implemented method for shell or offset feature detection in a 3D model representing a mechanical part. The method comprises obtaining a segmentation of the 3D model into segments. The method further comprises browsing all possible pairs of segments, and for each pair of segments, detecting whether the segments of the pair are offset to each other with an offset value.

The method may comprise one or more of the following:

- for each pair of segments, the segments comprising a first segment and a second segment, detecting whether the segments of the pair are offset to each other comprises:

  ○ for each element of the first segment, determining that there exists an element of the second segment that is offset to the element of the first segment if the barycenters of the two elements and their normals are offset to each other;

- determining that there exists an element of the second segment that is offset to the element of the first segment if the barycenters of the two elements and their normals are offset to each other comprises:

∘ computing a distance between the element of the first segment and a closest element of the second segment;

∘ comparing the computed distance with an average distance between the two segments;

∘ comparing a normal of each element at its barycenter and verifying that the normals are collinear up to a tolerance value and in opposite direction up to a tolerance value;

∘ determining that the element of the first segment is offset to said closest element if a difference between the computed distance and the average distance between the two segments is lower than a tolerance, and if the normals are collinear up to a tolerance value and in opposite direction up to a tolerance value;

- if the first segment and the second segment have same canonicity, the average distance between the two segments is the distance between the canonical surfaces corresponding to the two segments;
- if an element corresponds to a noisy part of the 3D model, the normal at the barycenter of the element is the normal of a projection of the barycenter on a fitting surface for the corresponding segment;
- the method further comprises merging symmetric detected pairs of segments;
- the method further comprises clustering the detected pairs of segments based on their offset values;
- the method further comprises removing, in at least some clusters, detected pairs of segments which are located on a same side of a shell geometry defined by an exterior shell corresponding to the cluster;
- the method further comprises for each cluster, merging adjacent offset pairs of segments in the cluster, the merging thereby resulting in pairs of sets of segments offset to each other;
- the method further comprises removing pairs of sets of segments that include single segments and/or pairs of sets of segments that have common segments and/or pairs of sets of segments with insufficient covering of the 3D model;
- the method further comprises, for each pair of sets, detecting segments which are not in the pair and which are adjacent to both of the sets of the pair; and/or
- the method further comprises:

∘ for each set of the pair, computing a bounding sphere of a surface covered by the set; and
∘ if the computed bounding spheres have different radiuses, determining that the set corresponding to the smaller radius is an inner set and that the set corresponding to the larger radius is an outer set.

It is further provided a computer program comprising instructions for performing the method.

It is further provided a computer readable storage medium having recorded thereon the computer program.

It is further provided a system comprising a processor coupled to a memory, the memory having recorded thereon the computer program.

## BRIEF DESCRIPTION OF THE DRAWINGS

Non-limiting examples will now be described in reference to the accompanying drawings, where:

- FIG.s 1 to 24 illustrate the method; and

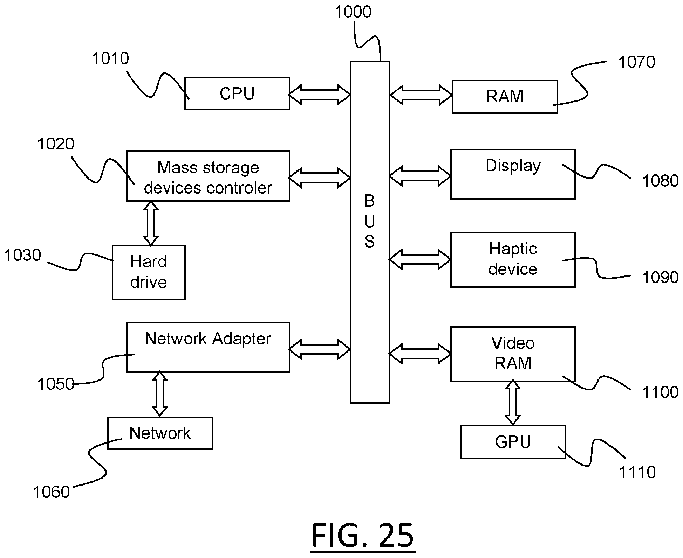

- FIG. 25 shows an example of the system.

## DETAILED DESCRIPTION

It is proposed a computer-implemented method for shell or offset feature detection in a 3D model representing a mechanical part. The method comprises obtaining a segmentation of the 3D model into segments. The method further comprises browsing all possible pairs of segments, and for each pair of segments, detecting whether the segments of the pair are offset to each other with an offset value.

This constitutes an improved solution for shell or offset feature detection in a 3D model representing a mechanical part.

Notably, the method starts from a segmentation of the 3D model to perform detection of shell or offset feature(s). Specifically, the method browses the segments of the segmentation and detects pairs of segments which are offset to each other with an offset value (which the method may as well compute for each pair). Detection of these pairs of segments forms a basis for determining the shell or offset features that create corresponding geometries in the model. By starting from a segmentation (that is a macroscopic level of the 3D model), and not from a raw format of the 3D model (e.g. raw mesh or points cloud), the method removes the need for any sampling of the 3D model for performing the detection. Furthermore, the method removes the need of clustering and region growing, at least on a large amount of sampled data points. This improves robustness of the detection and reduces computation requirements.

Furthermore, shell or offset feature detection has many applications.

The method may notably be used for shell or offset feature detection in a 3D model that stems from a 3D scan of the mechanical part. In this case, the 3D model considered in the method is obtained from a 3D scan of the mechanical part. The method may comprise performing this 3D scan (as an initial step), or simply obtaining a 3D model resulting from this scan (e.g. by downloading the model). Such 3D model may typically be a 3D point cloud resulting from a 3D scan, or a 3D mesh inferred from such point cloud through a mesh reconstruction process. Such model may feature noise, depending on the quality of the scan. The method thus performs processing of this scanned 3D model to detect offset or shell features in this scanned 3D model and to thereby infer which geometries correspond to (i.e. could be obtained by) application of a shell or offset CAD feature.

The 3D model may alternatively be obtained by another process than a scan. For example, the 3D model may result from a previous design process, and the method may be used in the case where the CAD feature tree of the model has been lost, or simply does not exist, and there is a need to infer the CAD features of the model, including the shell features and offset features, within a step of construction or reconstruction of the CAD feature tree.

Both in the case where the 3D model results from a 3D scan and in the case where the model results from a previous design process but misses a CAD feature tree, the detection of shell or offset features in the model performed by the method may be part of a reverse engineering process to reverse engineer the model by finding its CAD features. The method constitutes in this case a step of finding the shell and offset CAD features.

The method may be integrated into a design and manufacturing process of the mechanical part, where the method is part of a step of inference/reconstruction of the CAD feature tree of the mechanical part. Once the CAD feature tree is constructed, the model is a CAD model and is fully defined/parameterized by CAD features. The process may further comprise a step of conversion of such CAD model into a CAM file (or any similar data) comprising control instructions for manufacturing the mechanical part having the geometry defined by the CAD features of the model. Such a step may be performed by any known method. For the specific shell or offset features resulting from the method, this conversion step may infer a machining path to manufacture the corresponding shell or offset features by machining, as known in the art. The geometry defined by shell features may alternatively be manufactured by casting (in which case they may be referred to as "thin casted parts"), and the conversion step may comprise an inference of the dimension of the corresponding mold(s), for manufacturing of the mold(s) (for example by machining).

The method is for shell or offset feature detection in a 3D model representing a mechanical part. This means that the method provides a result that allows to infer the shell or offset features that may be used to create corresponding geometries in the model. Specifically, the method outputs at least detected pairs of segments of the segmentation of the model that are offset to each other with an offset value (and may possibly also compute/output this offset value for each segment). These pairs can be used for determination of the complete shell or offset features to which they correspond. This may be done with additional steps, that the method may comprise, and which may be performed hereinafter, that notably merge detected offset zones to determine the complete shell or offset features of the model. In examples, the method only detects shell features because the model only features geometries corresponding to shells and not to offsets.

The 3D model represents the geometry of a product (i.e. the mechanical part), e.g. to be manufactured in the real world subsequent to the completion of its virtual design with for instance a CAD software solution or CAD system. The mechanical part may be an assembly of parts, as the assembly of parts may be seen as a part itself from the point of view of the method, or the method may be applied independently to each part of the assembly, or more generally any rigid body assembly (e.g. a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D model may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

The 3D model may form a discrete geometrical representation of the mechanical part. The discrete geometrical representation is herein a data structure which comprises a discrete set of pieces of data. Each piece of data represents a respective geometrical entity positioned in a 3D space. Each geometrical entity represents a respective location of the mechanical part (in other words, a respective portion of material constitutive of a solid represented by the 3D model). The aggregation (i.e. union or juxtaposition) of the geometrical entities represents altogether the mechanical part. The discrete geometrical representation herein may in examples comprise a number of such pieces of data higher than 100, 1000, or 10000.

The discrete geometrical representation may for example be a 3D point cloud, each geometrical entity being a point. The discrete geometrical representation may alternatively be a 3D mesh, each geometrical entity being a mesh tile or face. The 3D mesh may be regular or irregular (*i.e.* consisting or not of faces of a same type). The 3D mesh may be a polygonal mesh, for example a triangular mesh. The 3D mesh may be obtained from a 3D point cloud, for example by triangulating the 3D point cloud (*e.g.* with a Delaunay triangulation). The 3D point cloud herein may be determined from physical measurements on the mechanical part, for example within a 3D reconstruction process. The 3D reconstruction process may comprise providing the mechanical part, providing one or more physical sensors each configured for acquiring a respective physical signal, and acquiring one or more respective physical signals by operating the one or more physical sensors on the mechanical part (*i.e.* scanning the mechanical part with each sensor). The 3D reconstruction may then automatically determine a 3D point cloud and/or a 3D mesh based on the measurements, according to any known technique. The one or more sensors may comprise a plurality of (*e.g.* RGB, and/or image or video) cameras and the determination may comprise a structure-from-motion analysis. The one or more sensors may alternatively or additionally comprise one or more depth sensors (*e.g.* on an RGB-depth camera) and the determination may comprise a 3D reconstruction from depth data. The one or more depth sensors may for example comprise a laser (*e.g.* a lidar) or an ultrasound emitter-receiver.

The method may comprise, for example as an initial step, providing the 3D model. The providing of the 3D model may comprise retrieving the 3D model, *e.g.* from a (*e.g.* distant) database or server or memory where the 3D model has been stored further to its creation or acquisition or obtention (*e.g.* through a reconstruction process as previously discussed). For example, the retrieving may comprise accessing the database or memory and downloading the 3D model. Alternatively, the providing of the 3D model may comprise performing physical measurements (*e.g.* a 3D scan) on the mechanical part and determining the 3D model from the physical measurements, for example through a 3D reconstruction process as previously discussed. The providing of the 3D modeled object may alternatively comprise creating, *e.g.* by a user, the 3D model, *e.g.* by designing it with a dedicated software solution.

The method comprises obtaining a segmentation of the 3D model into segments.

As known in the art, given a 3D model (e.g. a discrete 3D model such as a 3D mesh or 3D point cloud), performing a segmentation of the model consists in splitting/partitioning the faces of the 3D model into several connected clusters, called segments, where each segment maximizes its inner consistency, while minimizing its similarity with respect to the other segments, the clusters/segments being the result of the segmentation and being possibly referred to as "the segmentation". The segmentation obtained by the method may be any segmentation of the 3D model. The segmentation obtained by the method may for example be the segmentation resulting from the method for segmenting a 3D modeled object disclosed in European Patent Application EP21305195.6, which is incorporated herein by reference. The segmentation obtained by the method may alternatively be the segmentation resulting from the method for segmenting a discrete 3D model disclosed in European Patent Application EP23306186.0, which is incorporated herein by reference. The segmentation obtained by the method may yet alternatively be a segmentation obtained by applying the neural network learnt according to the method of machine-learning disclosed in European Patent Application EP21305293.9.

Obtaining the segmentation may comprise performing the segmentation of the 3D model, for example by applying one of the methods or neural network disclosed in the three above-referenced European Patent Applications. Obtaining the segmentation may alternatively comprise retrieving (*e.g.* downloading or opening in the appropriate software) an already obtained segmentation (*e.g.* that results of the application of one of the methods or neural network disclosed in the three above-referenced European Patent Applications) from a memory, database, or server on which the segmentation has been stored further to its obtention.

FIG. 4 shows an example of the 3D model, where the 3D model is a 3D mesh, and FIG. 5 shows an example of the segmentation of the 3D model.

The method comprises browsing all possible pairs of segments. This means that the method accesses a list of all the possible segments (for example the segments may for that be labeled/indexed) and considers (*e.g.* one by one) all possible pairs formed with these segments. For each pair of segments, the method comprises detecting whether the segments of the pair are offset to each other with an offset value. This may be done by any method for offset detection between two surfaces (the segments being surfaces).

Each pair of segments comprises a first segment and a second segment. For each pair of segments, the detection of whether the segments of the pair are offset to each other may comprise, for each element of the first segment, determining that there exists an element of the second segment that is offset to the element of the first segment if the barycenters of the two elements and their normals are offset to each other (i.e. if this last condition on the barycenters is determined to be met, it is determined that such second element exists). By "element of a segment", the following is meant: if the 3D model is a 3D mesh, each element of a segment is a face of the mesh (*e.g.* a triangle in the case of a triangular mesh) that belongs to the segment; if the 3D model is a 3D point cloud, each element of a segment is defined by a point (of the point cloud), its normal vector and its nearest neighbors (e.g. found according to any nearest neighbors searching method). The method may determine, for all elements of the first segment, whether the element of the first segment is offset to an element of the second segment by determining whether there exists an offset transformation that transforms the barycenter of the element of the first segment into the barycenter of the element of the second segment, and that also transforms the normal of the element of the first segment at its barycenter into the normal of the element of the second segment at its barycenter. If there exists such offset, the two elements are determined by the method to be offset to each other.

Determining that there exists an element of the second segment that is offset to the element of the first segment if the barycenters of the two elements and their normals are offset to each other may comprise:

- computing a distance (*e.g.* Euclidean distance) between the element of the first segment and a closest element of the second segment (*e.g.* the element of the second segment that has, among all elements of the second segment, the minimal distance to the element of the first segment);
- comparing the computed distance with an average distance between the two segments;
- comparing a normal of each element at its barycenter (*i.e.* comparing the two normals of the two elements at their barycenters) and verifying that the normals are collinear up to a tolerance value (*e.g.* a collinearity tolerance value for verifying collinearity) and in opposite direction up to a tolerance value (*e.g.* an opposite direction tolerance value for verifying opposite direction of two elements);
- determining that the element of the first segment is offset to said closest element if a difference between the computed distance and the average distance between the two segments is lower than a tolerance value *(e.g.* a distance tolerance value for verifying discrepancy between the computed distance and the average distance), and if the normals are collinear up to a tolerance value (*i.e.* the collinearity tolerance value) and in opposite direction up to a tolerance value (*i.e.* the opposite direction tolerance value).

Any tolerance value or threshold herein may be predetermined (that is, set beforehand, as an initial step of the method), and may be either set by a user or be of fixed value. For example, the tolerance values *distance tolerance for canonic offsets, distance tolerance for non-canonic offsets, dot product tolerance, offset clustering tolerance,* and *node coverage ratio tolerance,* which will be discussed hereinafter, may all be predefined in this manner (N.B.: the word "node" may stand herein for "segment", as in the segmentation methods discussed above, the segments correspond to nodes of a certain graph). Both *distance tolerances* and the *offset clustering tolerance* are defined as fractions of the radius of the input geometry's bounding sphere which will be discussed hereinafter. This enables robustness to change in the scale of the input geometry.

If the first segment and the second segment have same canonicity, the average distance between the two segments is the distance between the canonical surfaces corresponding to the two segments. Two segments have a same canonicity if they can be fitted by a same type of canonic primitive, *e.g.* belonging to a set of usual canonic geometric primitives. Such set may include or consist in the following primitives: plane, cylinder, cone, sphere, and torus. In this case, each segment defines a canonical surface of the type of the said canonic primitive, and the average distance is the distance between these canonical surfaces. For segments of different canonicity, the average distance may be an average of all the distances each between an element of the first segment and its closest element in the second segment.

If an element corresponds to a noisy part of the 3D model, the normal at the barycenter of the element is the normal of a projection of the barycenter on a fitting surface for the corresponding segment. The fitting surface may be any surface that fits said corresponding segment (as determined by any suitable surface fitting method, which the method may execute, *e.g.* in an initial step of the method). The corresponding segment is the segment that comprises the element corresponding to said noisy part. A noisy part of the 3D model is a portion of the model that features noise, such as noise resulting from a scanning process used for acquiring the model as previously discussed.

Implementations of the step of browsing the possible pairs of segments and detecting for each pair whether the segments of the pair are offset to each other are now discussed.

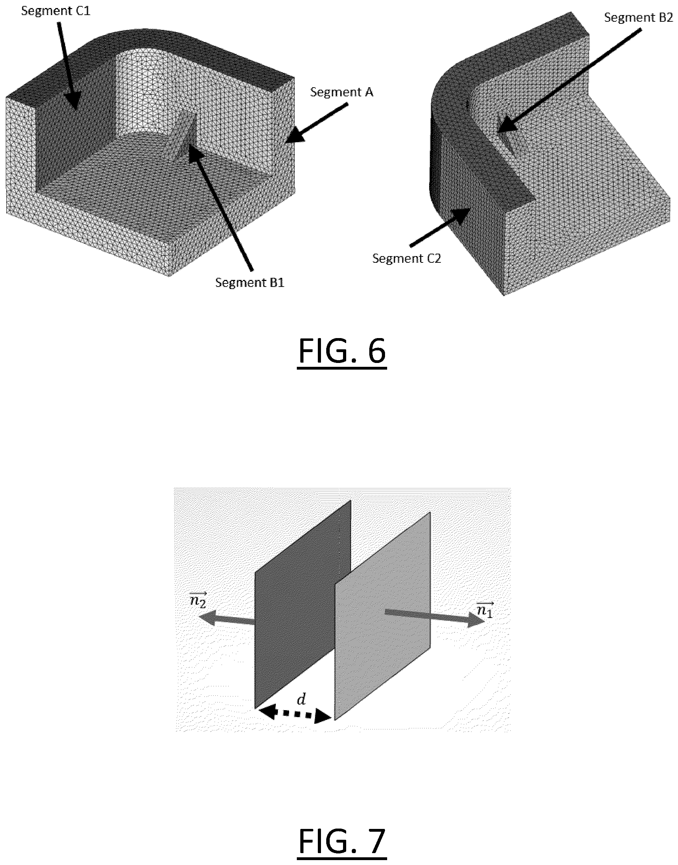

In these implementations, only offset pairs with segments that have locally opposite normal vectors are detected, since they must represent the two sides of a locally thin volume (e.g. offset pair (A, B1) in FIG. 6 is not detected, but offset pair (B1, B2) is detected). These implementations find all pairs of segments that have the same canonical type, pairs with segments that are both non-canonical and pairs of segments where one is canonical, and the other is not. However, these implementations keep, amongst pairs sharing a segment, only the ones with the smallest offset value (*i.e.* even though both offset pairs (A, C2) and (C1, C2) are detected, only (C1, C2) is kept since it has the lowest offset value of the two.

When using any one of the segmentation methods of the previously discussed three European Patent Application related to segmentation of a 3D model, the segmentation is of quality. The inventors have found that with such quality segmentations, it is not necessary to detect pairs of canonical segments with different canonical types (e.g. a cylinder and a cone that is almost a cylinder, i.e. with a very small angle), but implementations of the method could easily be extended to detect such cases, as well.

As previously discussed, if the first segment and the second segment have same canonicity, the average distance between the two segments is the distance between the canonical surfaces corresponding to the two segments. In these implementations, this condition may be verified by using the following condition.

Two planar segments are considered to be an offset pair if their normal vectors are collinear and the dot product of their normal vectors is negative, in which case the reference offset value d is the distance between the two planes, *i.e.* $|\overrightarrow{n_1} - \overrightarrow{n_2} + 1| < $ *dot product tolerance,* where dot product tolerance is a dot product tolerance value. This is illustrated by FIG. 7.

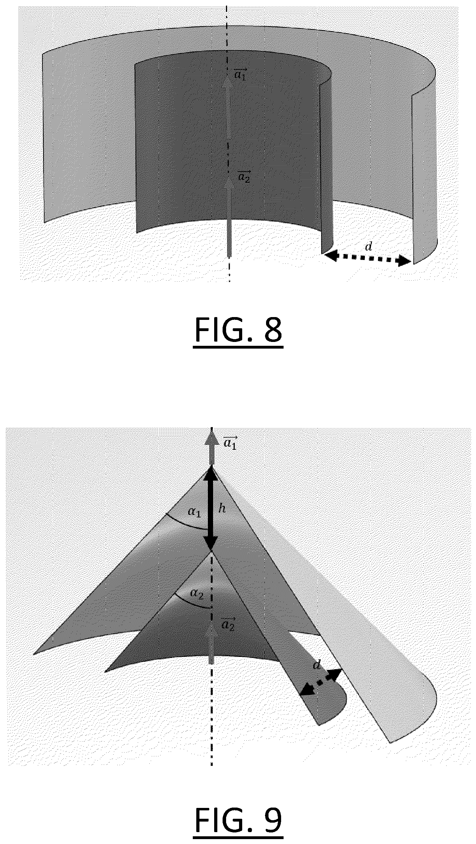

Two cylinder segments are considered to be an offset pair if their axes are collinear (using a tolerance, i.e. $||\overrightarrow{a_1} \cdot \overrightarrow{a_2}| - 1| < $ *dot product tolerance*) and the distance between the axes is less than a tolerance value called *distance tolerance for canonic offsets.* The reference offset value *d* is the absolute value of the difference between the two radii. This is illustrated by FIG. 8.

Two conical segments are considered to be an offset pair if their axes are collinear (using a tolerance, i.e. $||\overrightarrow{a_1} \cdot \overrightarrow{a_2}| - 1| < $ *dot product toleranc*), the distance between the axes is less than a tolerance value called *distance tolerance for canonic offsets,* and their angles are identical (using tolerance values, i.e. $||\overrightarrow{a_1} \cdot \overrightarrow{a_2}| - 1| < t$ and

$$|\alpha_1 - \alpha_2| < \frac{\pi}{2} - \arccos(t) = t + O(t^3) \approx t,$$

where t = *dot product tolerance*). The reference offset value *d* is the distance between the two cones, i.e. $d = h \times$

$$\alpha = \frac{\alpha_1 + \alpha_2}{2}$$

*sin*α with $\alpha = \alpha_1, \alpha = \alpha_2,$ or any other angle value that is close to both angles. This is illustrated by FIG. 9.

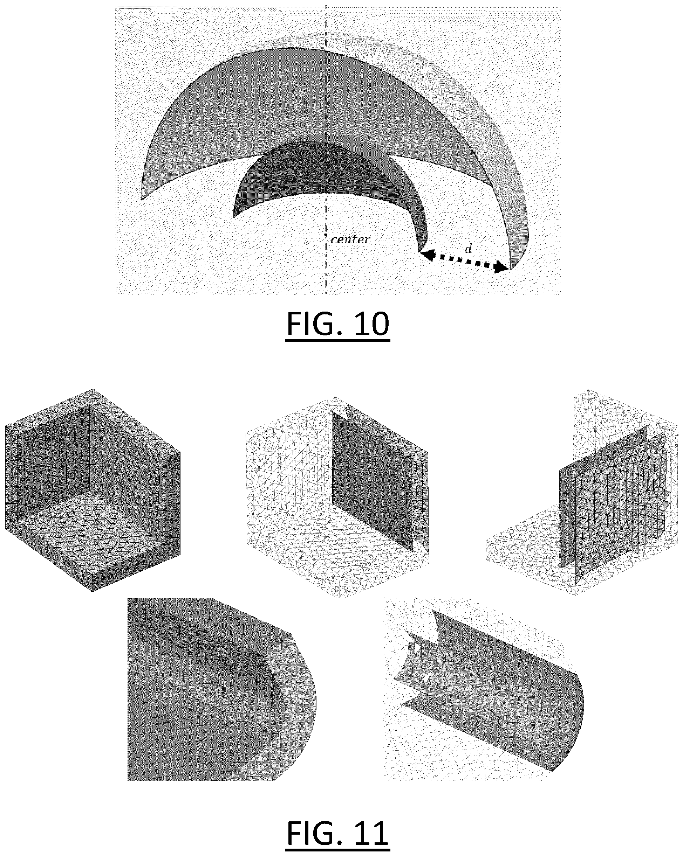

Two spherical segments are considered to be an offset pair if the distance between their centers is smaller than a tolerance value called *distance tolerance for canonic offsets.* The reference offset value d is the difference between the two radii. This is illustrated by FIG. 10.

Two torus segments are considered to be an offset pair if the distance between their centers and the difference between their major radii are both smaller than a tolerance value called *distance tolerance for canonic offsets.* The reference offset value d is the difference between the two minor radii.

In all the different primitive cases above, the reference offset value *d* is the distance between the canonical surfaces corresponding to the two segments which has been previously discussed. *distance tolerance for canonic offsets* is the said distance tolerance value which has been previously discussed.

The implementations then detect which sub-elements (e.g. triangles in a 3D mesh) of the two segments are at a distance that is sufficiently similar (up to the distance tolerance value for verifying discrepancy between the computed distance and the average distance as previously discussed) to the reference offset value with the following algorithm:

For each couple of canonic segments
For each sub-element of the first segment:

- Get the sub-element of the second segment that is closest to its barycenter;
- Compute the distance Δ between the two sub-elements;
- If $|\Delta - d| < $ *distance tolerance for canonic offsets,* and if the normal vectors of the two sub-elements are collinear and their dot product is negative (i.e. $|\overrightarrow{n_1} \cdot \overrightarrow{n_2}| + 1| < $ *dot product tolerance*), the two identified sub-elements are stored in the pair of subsets of the two segments that are offset of one another.

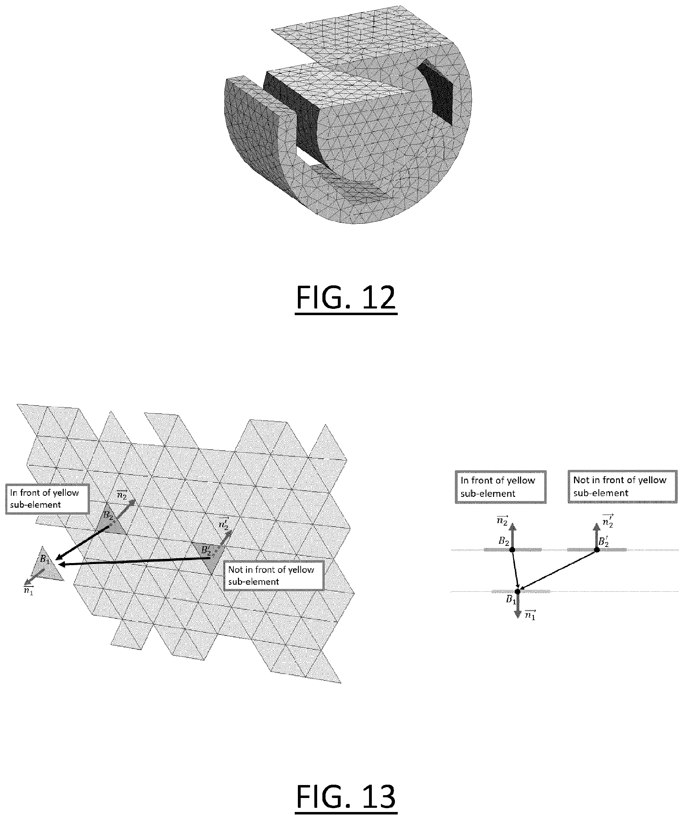

The algorithm shows why the method may detect that only part of a segment is in the offset with part of another segment (as illustrated on FIG. 11). Only pairs of sub-elements that have opposite face normal vectors are kept by the implementations, in order to avoid false positives, i.e. where segments that have compatible offset surfaces but wrong orientations (as illustrated on FIG. 12).

These implementations also detect all possible offsets between non canonic segments and any other segment (canonic and non-canonic) using the same approach, with the notable difference that we do not compute a reference offset value in these cases.

For that, the implementations iterate over the elements (e.g. the mesh triangles) and identify if a subset of the segment is an offset of a subset of another segment. This is done using the following algorithm:
For each couple of segments
For each sub-element $S_1$ of the first segment:

- $S_1$ has barycenter $B_1$ and normal vector $n_1$
- Get the sub-element $S_2$ of the second segment that is closest to $B_1$
- $S_2$ has barycenter $B_2$ and normal vector $n_2$
- If the following conditions are satisfied

  ○ $|\overrightarrow{n_1} \cdot \overrightarrow{n_2} + 1| < $ *dot product tolerance*
  ○ $||\overrightarrow{n_1} \cdot \overrightarrow{B_2 B_1}| - 1| < $ *dot product tolerance,*

  the elements are considered to be "in front" of each other (as illustrated by FIG. 13) and the implementations compute the distance Δ between the two sub-elements
- $\overline{\Delta}$ is the mean distance value of the already computed distances (obtained for the same couple of segments)
- If $|\Delta - \overline{\Delta}| < $ *distance tolerance for non - canonic offsets*

  ○ update $\overline{\Delta}$
  ○ Store the couple of elements in the pair of subsets of the two segments that are offset of one another.

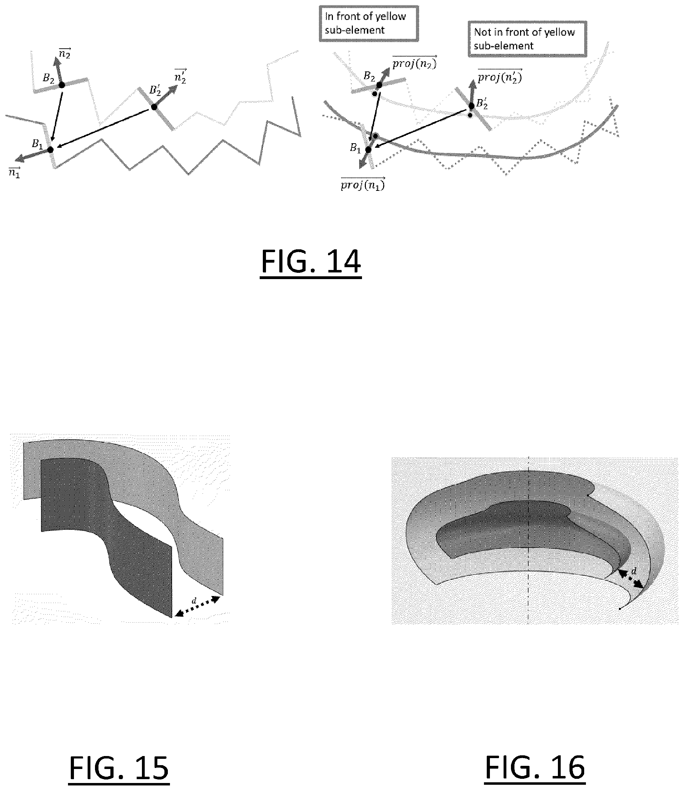

On noiseless meshes, the implementations use the normal vectors of the elements (e.g. the polygons). On noisy meshes, the implementations use the local normal vectors of the fitted surfaces (i.e. with reduced noise), which requires simply a projection of the barycenters on the respective fitted surfaces (as illustrated by FIG. 14). Furthermore, fine tuning of the set of tolerance parameters may be performed in order to perform in an improved way on noisy data.

The implementations may consider the special cases of pairs of segments which are both extrusion surfaces or both revolution surfaces. The method may detect these segments by any extrusion-detection method or any revolution detection method, such as the extrusion-detection method disclosed in European Patent Application EP21305673.2 and the revolution-detection method disclosed in European Patent Application EP21305763.1, which are both incorporated herein by reference. The implementations of the method may use the fitted extrusion or revolution profiles provided by these methods in order to simplify and accelerate the computations.

Two extrusion segments are an offset pair if their profile curves lie in parallel planes (i.e. if their extrusion directions are parallel) and if the profile curves are an offset of one another, i.e. the implementations apply the same computation as for general non canonical surfaces, but to the planar profile curves (i.e. in 2D instead of 3D). Comparing the extrusion limits of both surfaces (with respect to the position of the two profile planes), indicates whether the two extrusion surface segments are at least partly "in front" of each other or not. In the latter case, the two segments are not an offset pair. This is illustrated by FIG. 15.

Two revolution surfaces are in an offset pair if their axes are identical and the planar profile curves are a planar offset pair. Again, the implementations apply a 2D computation to check whether the two profile curves are an offset of one another. Finally, comparing the angular limits (with respect to the two profile planes) indicates whether the two may be "in front" of each other. This is illustrated by FIG. 16.

The method may then use the detected offset pairs of segments to determine large offsets pairs between sets of segments. For this, the following steps may also be performed to both filter out unwanted offset pairs and generate one or more large offsets when possible. These steps are now discussed. In implementations, these steps are in the order in which they are discussed hereinbelow, the output of a step being the input of the next step. In variations of the method, the order of these steps may be modified.

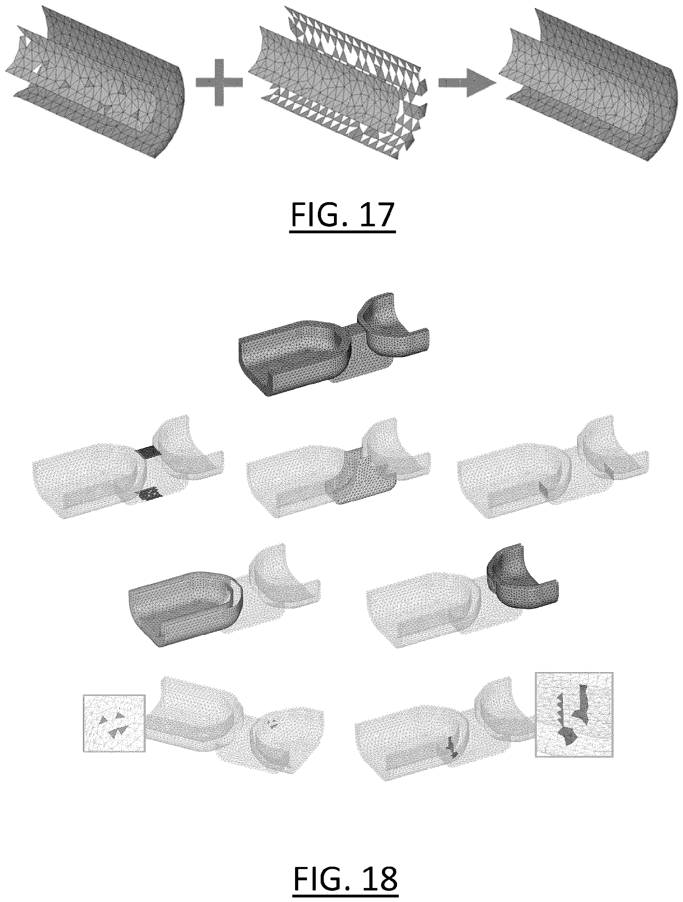

The method may further comprise merging symmetric detected pairs of segments. In other words, since the method conducts an exhaustive asymmetric search of possible offset pairs of segments, the method determines both an offset pair for a segment X with a segment Y and another offset pair for segment Y with segment X. The merging comprises identifying all such symmetric offset pairs and merging them, i.e. merging the sub-elements of the offset pairs, which frequently increases the number of sub-elements covered by the resulting symmetric offset pair of segments. This is illustrated by FIG. 17.

The method may further comprise clustering the detected pairs of segments based on their offset values. This may be done prior to or after the step of merging the symmetric pairs. In other words, for each detected pair of segments, the method as well detects (computes) their offset value. The clustering is a clustering based on these values. For that, any clustering method may be used, such as a mean-shift clustering method as discussed in N.J. Mitra, L. Guibas, M. Pauly, "Partial and approximation symmetry detection for 3d geometry", ACM Transactions on Graphics, pages 560-568, 2006, and in M. Pauly, N.J. Mitra, J. Wallner, H. Pottmann, L. Guibas, "Discovering structural regularity in 3d geometry", ACM Transactions on Graphics, pages 1-11, 2008, which are both incorporated herein by reference. Given the comparatively small number of offset values the method computes (i.e. as compared to these references, because the method processes the already segmented object), the clustering phase will have little impact on global computation performance, in practice. The inventors have found that simply unifying all offset values that are closer to their common mean value than an offset clustering tolerance parameter provides robust results. This tolerance parameter may be adapted to the level of noise of the input. It is to be noted that clustering may not remove some or any outliers, neither those composed of fully covered single node pairs (as illustrated on FIG. 18, top-left and top center zoomed view) or those composed of only a few triangles (as also illustrated on FIG. 18, both bottom-left and bottom-right zoomed view).

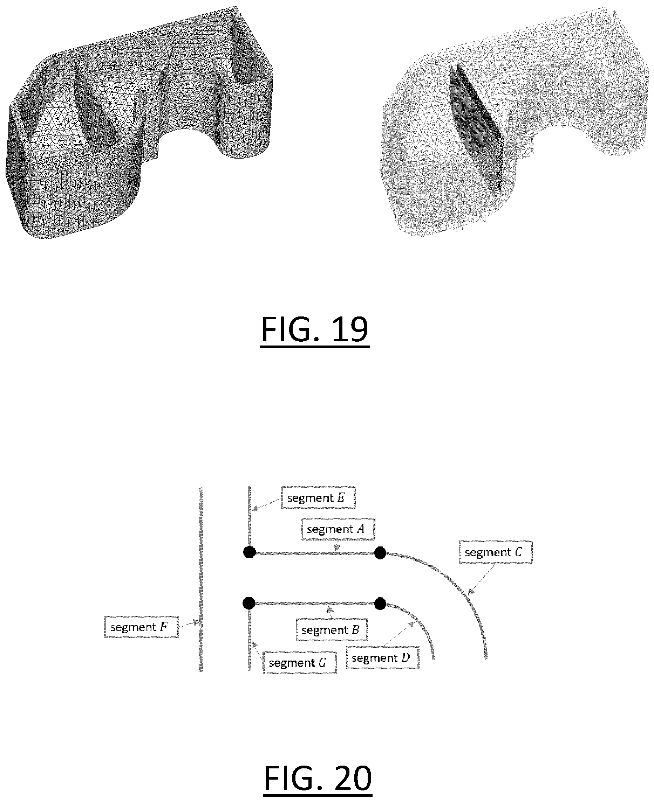

The method may further comprise removing, in at least some cluster, detected pairs of segments which are located on a same side of a shell geometry defined by an exterior shell corresponding to the cluster. In other words, at least some (e.g. all) clusters each define a shell geometry (i.e. they correspond to a shell feature) formed by an exterior shell. The method detects for these clusters all the pairs of segments which are located on a same side of the shell geometry. This allows to avoid combining detected offsets that correspond to, for example, interior geometry of the shell (e.g. areas of the geometry that serve the purpose of increasing the rigidity of the mechanical part, as illustrated on FIG. 19), i.e. that are located on the same side of the shell geometry defined by the exterior shell.

In implementations (which are combinable with the previously discussed implementations), the method may for that use the following algorithm:
For each cluster C of offset pairs
For each offset pair O in C

    For each segment S contained in O (S' is the other or opposite segment of O)

For any neighboring segment *N* that is adjacent to *S*

◦ If there is an offset pair *O'* in *C* that contains *N* and if *N* is adjacent to *S'* then *O* is an interior offset pair and is removed

For all neighboring segments *N* that are adjacent to *S*

◦ Find all offset pairs *O'* in *C* that contain *N* and an opposite segment Σ
◦ If none of these segments Σ is adjacent to the other segment *S'* of *O* then *O* is an interior offset pair and is removed

Repeat
For each offset pair *O* in *C*
If *O* is fully adjacent to an already defined interior offset pair then it is also an interior offset pair and is removed

Until no more interior offset pairs are found

In the above algorithm, two offset pairs are said to be fully adjacent if and only if they have adjacent or identical nodes on both sides. For example, in FIG. 20, offset pairs (A, B) and (D,C) are fully adjacent, but (A, B) and (E, F) are not, and neither are (A, B) and (F, G).

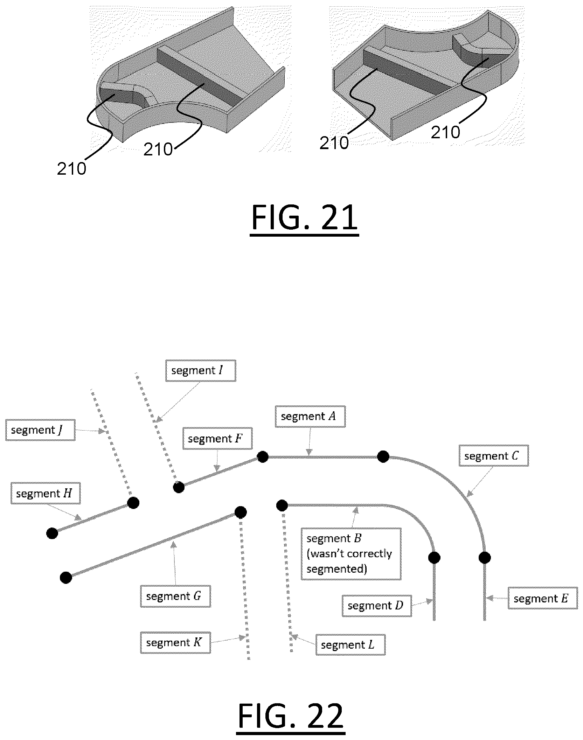

This removal step is performed after the clustering step. However, in variations of the method, the removal step may be performed before the clustering step and/or before the step of merging the symmetric pairs. Performing the removal step before the clustering step does not require any adaptation of the method (it simply necessitates a search of the offsets to remove amongst all the offset pairs). It has the advantage to detect and remove internal offset pairs (illustrated for example by references 210 in the examples shown on FIG. 21). which are not identified as such by the method with the current order of the steps and which would be removed only because of their too weak covering (which in practice is normally the case). This may increase the reliability of the method. Performing the removal step prior to the merging step would require the following adaptation: if a pair (A,B) is an internal offset, label the symmetric pair (B,A) as internal offset as well.

The method may further comprise, for each cluster, merging adjacent offset pairs of segments in the cluster. This merging thereby results in pairs of sets of segments offset to each other. Two offset pairs of segments are considered adjacent if at least a segment covered by one offset pair is adjacent to a segment covered by the other offset pair, or if they have a common segment. The method detects and merges such pairs. The result of the merge of two adjacent offset pairs is an offset pair between two sets of segments that contain the segments of the two initial pairs. There are four simple cases where offset pairs are adjacent and may be merged (illustrated by FIG. 22):

- Offset pair (B, C) is merged with offset pair (D, E), since B is adjacent to D and C is adjacent to E. The result is a merged offset between the sets {B, D} and {C, E}.
- Offset (A, B) is merged with offset (B, C), since A and C are adjacent. The result is a merged offset between the sets {B} and {A, C}.
- Offset pair (F, G) is merged with offset pair (G, H), because they share a common segment. The result is a merged offset between the sets {F, H} and {G}. Please note: if there are one or several interior offset pairs between segments F and H (e.g. (I, J)) in the same cluster, they have been removed in the previous step.
- Offset pair (A, B) is merged with offset pair (F, G), because segments A and F are adjacent. The result is a merged offset between the sets {A, F} and {B, G}. Please note: if there are one or several interior offset pairs between segments B and G (e.g. (K, L)) in the same cluster, they have been removed in the previous step.

In the second and third cases, the initial offset pairs cover only part of the common segment (B and G respectively) and the resulting merged offset covers the union of both previously covered parts of the common segment.

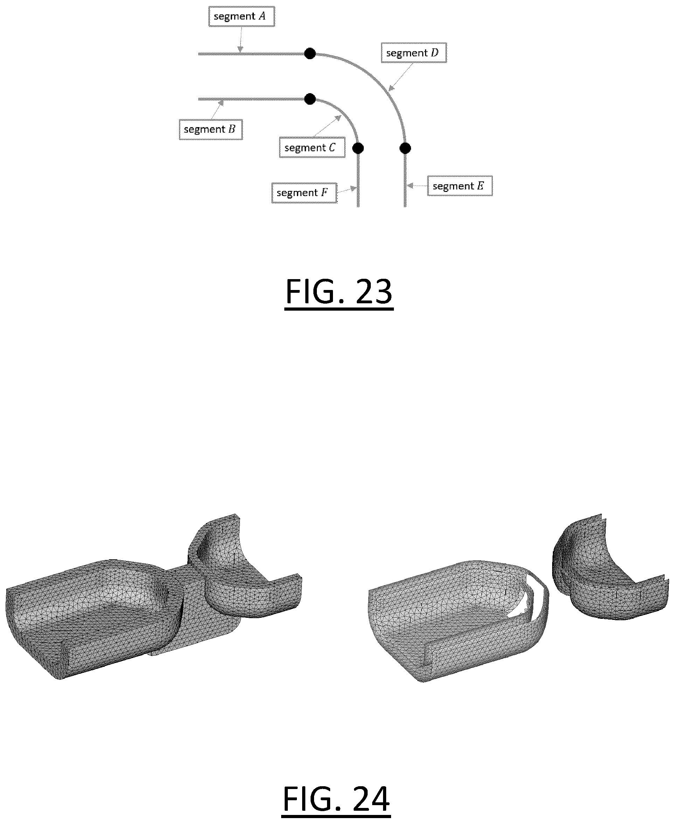

The objective of this step is both to separate disconnected offset clusters into separate offsets and to identify the two sets of adjacent segments of each separate offset (e.g. offset pairs (A, B), (C, D) and (E, F) of the same cluster in FIG. 23, become the offset between the two sets {A, D, E} and {B, C, F})

For each cluster of offset pairs of segments, the method merges all adjacent offset pairs into a single offset pair (of sets of segments) until there remain only non-adjacent offset pairs.

This merging of adjacent pairs is done after the clustering and the step of removal of same-side-located pairs in the clustering.

Further to this merging of adjacent pairs, the method may further comprise removing pairs of sets of segments that include single segments and/or pairs of sets of segments that have common segments between both sides and/or pairs of sets of segments with insufficient covering of the 3D model. This allows to remove false positives. The removal of any remaining offset pair with single segments allows to avoid shell features that are too simple and add little value. The removal of offsets between sets of segments that are adjacent to each other (i.e. because they share a segment) allows for instance, the removal of a shell feature on a simple cube or, more generally, any extrusion or revolution of a square profile or a hexagonal profile octagonal profile. Finally, the removal of pairs of sets with insufficient covering may use a coverage ratio tolerance to check whether all segments in the offset are sufficiently covered by the corresponding set. If the segments are not sufficiently covered then the offset is considered to be a false positive as well. This last removal may additionally or alternatively be done by selection of the sets providing the largest cover of the input geometry, by any suitable method (for example, the two offsets on the right-hand side of FIG. 24 are selected).

The method may further comprise, for each pair of sets, detecting segments which are not in the pair, and which are adjacent to both of the sets of the pair. These segments correspond to the thin segments of the shell feature represented by the pair.

The method may further comprise, for each set of the pair, computing a bounding sphere of a surface covered by the set. The method may then comprise, if the computed bounding spheres (i.e. for the two sets of the pair) have different radiuses, determining that the set corresponding to the smaller radius is an inner set and that the set corresponding to the larger radius is an outer set. The "thin" segments are segments that are not in the offset and are adjacent to both the inner and the outer sets of segments.

The output of the method may be a list of detected shell feature data sets. Each shell data set contains a pair of subsets of the input geometry that are offset from one another, the corresponding offset value and the subset of the geometry that corresponds to the "thin" faces generated by the shell feature.

Advantages of the method are now summarized.

The method allows to detect what part of a provided 3D mesh or point cloud could have been generated by applying shell features (i.e. by creating offset surfaces). The method also allows to compute the offset value and to identify the "thin" faces that are not offset and result from the "faces to remove." This information can then be used to manually or automatically generate a CAD feature tree that generates the input geometry and contains the inferred shell features. This captures the design intent and facilitates the editing and manufacturing of the part that corresponds to the initial geometry (with potential modifications). The exact description of the geometry is greatly simplified by the presence of the shell feature (rather than, say, a duplicated feature list that generates the inner surface of the shell result, for example). In the case of a point cloud, the method may require, for each point, both the normal vector, as well as the nearest points in the neighborhood (thus providing a minimal topological information).

The method invention detects subsets of the input geometry that are invariant to a corresponding offset operation. The method makes it possible to reconstruct CAD feature trees with shell features (on top of other features, such as pads, pockets, shafts, grooves, fillets, etc.), which is an improvement over similar methods that only generate feature trees without shell features. This makes the editing and manufacturing of the part much easier (by simply modifying the parameters of the shell features). It also captures the design intent more completely and guarantees a more robust parametric design (e.g. modifying other features does not affect the "thickness" of the mechanical part, since that is controlled by the shell feature parameter that sets the offset value) The exact description of the geometry is greatly simplified by the presence of the shell feature (rather than, say, a duplicated feature list that generates the inner surface of the shell result, for example).

The method may also be used to detect other local symmetries and patterns. However, by exploiting the results of a segmentation, the method significantly simplifies the algorithm and increases performance and robustness. For example, a pairing phase based on signatures calculated at sampling points seems to particularly reduce the accuracy of the results, whereas the method avoids such probabilistic uncertainties, by comparing only corresponding large-scale geometries that were identified by the segmentation process. Furthermore, the long computation times required by a mean-shift clustering to detect clusters in transformation space, may be significantly reduced by the method's approach (as it generates a small number of transformations).

As previously discussed, the method may be part of a design and manufacturing process of the mechanical part. "Designing a manufacturing product/mechanical part/mechanical product" designates any action or series of actions which is at least a part of a process of elaborating a modeled object (3D or 2D) of the manufacturing product/mechanical part/mechanical product. The method may form such a process or may form at least a part of the process, as the method may be part of a step of CAD feature tree inference, as previously explained.

The method thus generally manipulates modeled objects, such as the 3D model processed by the method. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (*e.g.* a CAD system or a CAD software), it is additionally meant any system, software or hardware, adapted at least for designing a modeled object on the basis of a graphical representation of the modeled object and/or on a structured representation thereof (*e.g.* a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e.* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The modeled object outputted/designed/taken as input by the method may be a 3D discrete geometrical representation of a manufacturing product/mechanical product/mechanical part as previously discussed. The discrete geometrical representation is a data structure which comprises a discrete set of pieces of data. Each piece of data may specify an element of the product/mechanical part and be referred to as a discrete element. The discrete geometrical representation may be 3D. Alternatively, the discrete geometrical representation may be both 3D and 2D, *i.e.* may comprise a 3D portion which is a 3D discrete geometrical representation and a 2D portion which is a discrete geometrical representation, such as a hybrid 3D-2D meshing (e.g. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the product/mechanical part, such as a solid 3D finite element model (FEM) or a 3D volume mesh (*e.g.* a 3D tetrahedral mesh). In such a case, each piece of data may represent a respective geometrical entity positioned in a 3D space such that the pieces of data form a solid representation of the mechanical part/product (i.e., "solid 3D discrete geometrical representation"). Each geometrical entity may represent a respective location (i.e., a material point) of the 3D object (in other words, a respective portion of material constitutive of a solid represented by the 3D object). The aggregation (i.e., union or juxtaposition) of the geometrical entities represents altogether the 3D object as a solid/volume. The 3D discrete geometrical representation may alternatively be a skin 3D discrete geometrical representation, representing a skin of the product/mechanical part, such as a 3D surface mesh (*e.g.* a triangular surface mesh) or a tessellation. In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

The discrete geometrical representation may be, or may be converted into further to the method, a CAE model, also referred to as "finite element model (FEM)". The CAE model may stem from a CAD model representing the mechanical part/product, e.g. the method comprises at an initial stage obtaining the CAE model from the CAD model, for example using a meshing (*e.g.* triangulation) process. Conversely, a CAE model may be converted into a CAD model. The method may design/output a CAE model which may be then converted into a corresponding CAD model. The method may comprise, or may be included in wider process that comprises, or may form a solution to, (*e.g.* automatically) converting the CAE model designed/outputted by the method into a CAD model, by using any known (*e.g.* automatic) CAE to CAD conversion process that converts a CAE model into a CAD model.

As previously discussed, the method may be part of a step of converting the input 3D model into a CAD model, for example comprising or consisting in a feature tree and/or a B-rep. Such a model may stem from a CAE model and may results from a CAE to CAD conversion process, that the method may for example comprise at an initial stage.

The CAD model may be feature-based (*e.g.* it may comprise a feature tree, and optionally a corresponding B-rep obtained by executing the feature tree). A feature-based 3D model allows (*e.g.* during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e.g.* during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (*e.g.* footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object that the method contributes to design. The production process may comprise the following steps:

- (*e.g.* automatically) applying the method, thereby obtaining a CAD model of the mechanical part;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise one or more of the following steps:

- editing the obtained CAD model;
- performing simulation(s) based on the CAD model or on a corresponding CAE model (e.g. the CAE model from which the CAD model stems, after a CAE to CAD conversion process), such as simulations for validation of mechanical, use and/or manufacturing properties and/or constraints (*e.g.* structural simulations, thermodynamics simulation, aerodynamic simulations);
- editing the CAD model based on the results of the simulation(s);
- optionally (*i.e.* depending on the manufacturing process used, the production of the mechanical product may or may not comprise this step), (*e.g.* automatically) determining a manufacturing file/CAM file (*e.g.* comprising manufacturing instructions for manufacturing the product represented by the CAD model and/or control instructions for the manufacturing process and/or for commanding the manufacturing process or manufacturing tool(s) thereof) based on the (*e.g.* edited) CAD model (*e.g.* the control instructions stem from the CAD file storing the CAD model and/or specifications of the CAD model), for production/manufacturing of the manufacturing product;
- sending the CAD file and/or the manufacturing file/CAM file to a factory in view of manufacturing the product represented by the CAD model; and/or
- (*e.g.* automatically) producing/manufacturing, based on the determined manufacturing file/CAM file or on the CAD model, the mechanical product originally represented by the model outputted by the method. This may include feeding (*e.g.* automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g.* upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (*i.e.* a designer), performing one or more editions of the CAD model, *e.g.* by using a CAD solution. The modifications of the CAD model may include one or more modifications each of a geometry and/or of a parameter of the CAD model. The modifications may include any modification or series of modifications performed on a feature tree of the model (*e.g.* modification of feature parameters and/or specifications) and/or modifications performed on a displayed representation of the CAD model (*e.g.* a B-rep). The modifications are modifications which maintain the technical functionalities of the part/product, *i.e.* the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing set up model obtained from the CAD model. The manufacturing set up may comprise all data required for manufacturing the mechanical product (*e.g.* control instructions for controlling the manufacturing process) so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds. com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receive the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). As previously explained the part may also be a thin casted part, in which case the machined part is the corresponding mold. In such a case, the production process may comprise a step of determining the CAM file. This step may be carried out automatically, by any suitable CAM solution to automatically obtain a CAM file from a CAD model of a machined part. The determination of the CAM file may comprise (*e.g.* automatically) checking if the CAD model has any geometric particularity (*e.g.* error or artefact) that may affect the production process and (*e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges (*e.g.* with a round or fillet radius that corresponds, *e.g.* substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e.g.* rounding or filleting of geometries) may be carried out automatically as previously discussed, but also, by a user (*e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise (*e.g.* automatically) determining the machining or milling path, *i.e.* the path to be taken by the machining tool to machine the product. The path may comprise a set of coordinates and/or a parameterized trajectory to be followed by the machining tool for machining, and determining the path may comprise (*e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise (*e.g.* automatically) setting machine parameters, including cutting speed, cut/pierce height, and/or mold opening stroke, for example based on the determined path and on the specification of the machine. Optionally, the determination of the CAM file may then comprise (*e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/-

manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e.g.* injection-molding, or casting in which case the part may be a thin casted part). In such a case, the production process may comprise the step of determining the CAM file. This step may be carried out automatically, by any suitable CAM solution to automatically obtain a CAM file from a CAD model of a molded part. The determining of the CAM file may comprise (*e.g.* automatically) performing a sequence of molding checks based on the CAD model to check that the geometry and/or distribution of material captured by the CAD model is adapted for molding, and (*e.g.* automatically) performing the appropriate corrections if the CAD model is not adapted for molding. Performing the checks and the appropriate corrections (if any) may be carried out automatically, or, alternatively, by a user (*e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (*e.g.* automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (*e.g.* automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 25 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for shell or offset feature detection in a 3D model representing a mechanical part, the method comprising:

   - obtaining a segmentation of the 3D model into segments; and
   - browsing all possible pairs of segments, and for each pair of segments, detecting whether the segments of the pair are offset to each other with an offset value.

2. The method of claim 1, wherein, for each pair of segments, the segments comprising a first segment and a second segment, detecting whether the segments of the pair are offset to each other comprises:

   - for each element of the first segment, determining that there exists an element of the second segment that is offset to the element of the first segment if the barycenters of the two elements and their normals are offset to each other.

3. The method of claim 2, wherein determining that there exists an element of the second segment that is offset to the element of the first segment if the barycenters of the two elements and their normals are offset to each other comprises:

   - computing a distance between the element of the first segment and a closest element of the second segment;
   - comparing the computed distance with an average distance between the two segments;
   - comparing a normal of each element at its barycenter and verifying that the normals are collinear up to a tolerance value and in opposite direction up to a tolerance value;
   - determining that the element of the first segment is offset to said closest element if a difference between the computed distance and the average distance between the two segments is lower than a tolerance, and if the normals are collinear up to a tolerance value and in opposite direction up to a tolerance value.

4. The method of claim 3, wherein, if the first segment and the second segment have same canonicity, the average distance between the two segments is the distance between the canonical surfaces corresponding to the two segments.

5. The method of claim 3 or 4, wherein, if an element corresponds to a noisy part of the 3D model, the normal at the barycenter of the element is the normal of a projection of the barycenter on a fitting surface for the corresponding segment.

6. The method of any one of claims 1 to 5, wherein the method further comprises:

   - merging symmetric detected pairs of segments.

7. The method of any one of claims 1 to 6, wherein the method further comprises:

   - clustering the detected pairs of segments based on their offset values.

8. The method of claim 7, wherein the method further comprises:

   - removing, in at least some clusters, detected pairs of segments which are located on a same side of a shell geometry defined by an exterior shell corresponding to the cluster.

9. The method of claim 8, wherein the method further comprises:

   - for each cluster, merging adjacent offset pairs of segments in the cluster, the merging thereby resulting in pairs of sets of segments offset to each other.

10. The method claim 9, wherein the method further comprises:

   - removing pairs of sets of segments that include single segments and/or pairs of sets of segments that have common segments and/or pairs of sets of segments with insufficient covering of the 3D model.

11. The method of claim 10, wherein the method further comprises, for each pair of sets:

    - detecting segments which are not in the pair and which are adjacent to both of the sets of the pair.

12. The method of claim 10 or 11, wherein the method further comprises:

    - for each set of the pair, computing a bounding sphere of a surface covered by the set; and
    - if the computed bounding spheres have different radiuses, determining that the set corresponding to the smaller radius is an inner set and that the set corresponding to the larger radius is an outer set.

13. A computer program comprising instructions which, when executed by a computer, cause the computer to perform the method of any one of claims 1 to 12.

14. A computer-readable data storage medium having recorded thereon the computer program of claim 13.

15. A computer system comprising a processor coupled to a memory, the memory having recorded thereon the computer program of claim 13.

## FIG. 1

## FIG. 2

FIG. 3A

FIG. 3B

FIG. 4

FIG. 5

## FIG. 6

## FIG. 7

FIG. 8

FIG. 9

FIG. 10

FIG. 11

FIG. 12

FIG. 13

FIG. 14

FIG. 15

FIG. 16

FIG. 17

FIG. 18

## FIG. 19

## FIG. 20

## FIG. 21

segment *I*

segment *J*

segment *F*

segment *A*

segment *C*

segment *H*

segment *B*
(wasn't correctly
segmented)

segment *G*

segment *D*

segment *E*

segment *K*

segment *L*

## FIG. 22

## FIG. 23

## FIG. 24

FIG. 25

**EUROPEAN SEARCH REPORT**

Application Number

EP 24 30 5650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARAÚJO ABNER M ?C ET AL: "A robust statistics approach for plane detection in unorganized point clouds", PATTERN RECOGNITION, ELSEVIER, GB, vol. 100, 16 November 2019 (2019-11-16), XP085993267, ISSN: 0031-3203, DOI: 10.1016/J.PATCOG.2019.107115 [retrieved on 2019-11-16] | 1,5, 13-15 | INV. G06F30/17 G06F30/20 G06T17/10 G06T19/20 ADD. G06F111/04 G06F119/16 |
| Y | * Sec. 1, 3, 3.2.1, 3.2.2; figure 2 * | 3,4 | |
| X | Vestaras Petras ET AL: "Test if 2 planes are coplanar - Grasshopper - McNeel Forum", McNeel Forum, 15 January 2018 (2018-01-15), XP093201190, Retrieved from the Internet: URL:https://discourse.mcneel.com/t/test-if-2-planes-are-coplanar/53034 | 1,6, 13-15 | |
| Y | * the whole document * | 3,4 | |
| X | Ats Cadd Core Pvt. Ltd.: "Autodesk AutoCAD: How to use Surface Offset Command in Autodesk AutoCAD", , 24 December 2019 (2019-12-24), XP093201267, Retrieved from the Internet: URL:https://www.youtube.com/watch?v=Oz0HRtgpcw8 | 1,2, 6-11, 13-15 | TECHNICAL FIELDS SEARCHED (IPC) G06F G06T |
| Y A | * Min 0:20 - 0:26; 0:50 - 1:09; 2:20 - 2:45 * | 3,4 12 | |

The present search report has been drawn up for all claims

| Place of search | Date of completion of the search | Examiner |
|---|---|---|
| Munich | 5 September 2024 | Lampmann, Arne |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21305195
- EP 23306186
- EP 21305293
- EP 21305673
- EP 21305763
- EP 3327593 A
- EP 21306754

**Non-patent literature cited in the description**

- **N.J. MITRA** ; **L. GUIBAS** ; **M. PAULY**. Partial and approximation symmetry detection for 3d geometry. *ACM Transactions on Graphics*, 2006, 560-568
- **M. PAULY** ; **N.J. MITRA** ; **J. WALLNER** ; **H. POTTMANN** ; **L. GUIBAS**. Discovering structural regularity in 3d geometry. *ACM Transactions on Graphics*, 2008, 1-11